# EUROPÄISCHE PATENTSCHRIFT

(11) **EP 3 368 304 B1**
(45) Veröffentlichungstag und Bekanntmachung des Hinweises auf die Patenterteilung: **12.08.2026**
(21) Anmeldenummer: 16791346.6
(22) Anmeldetag: 26.10.2016
(51) Int. Cl.: B32B 18/00, C04B 35/573, C04B 35/626, C04B 35/65, C04B 35/52, C04B 37/00, C04B 35/83, C21D 9/00, F27D 5/00

(54) **CARBONFASERVERSTÄRKTES CARBIDKERAMISCHES VERBUNDBAUTEIL**
CERAMIC CARBIDE COMPOSITE ELEMENT REINFORCED WITH CARBON FIBERS
ELEMENT COMPOSITE CÉRAMIQUE CARBIDE RENFORCÉ PAR DES FIBRES DE CARBONE

(30) Priorität: 28.10.2015 DE 102015221111
(43) Veröffentlichungstag der Anmeldung: 05.09.2018
(73) Patentinhaber: SGL Carbon SE, 65201 Wiesbaden (DE)
(72) Erfinder: GOLLING, Manfred, 86405 Meitingen (DE); PUTZ, Thomas, 86405 Meitingen (DE); HINGST, Karl, 86405 Meitingen (DE); VELTEN, Andreas, 86405 Meitingen (DE); DIETRICH, Simon, 86405 Meitingen (DE)
(86) Internationale Anmeldenummer: PCT/EP2016/075827
(87) Internationale Veröffentlichungsnummer: WO 2017/072187

(56) Entgegenhaltungen:
- EP-A1- 0 978 701
- EP-A1- 1 028 099
- WO-A1-2015/063178
- DE-A1- 102007 007 410
- DE-A1- 102011 084 626
- DE-T2- 69 609 140
- DE-U1- 20 319 600
- JP-A- 2000 026 165

## Beschreibung

Die vorliegende Erfindung betrifft ein keramisches Bauteil welches unidirektionale Lagen von Carbonfasern enthält, wobei die Lagen unmittelbar übereinanderliegend, beziehungsweise gestapelt, im Bauteil vorliegen und einen Lagenstapel mit einer Höhe, beziehungsweise Dicke, von mindestens 1,5 mm bilden. Weiterhin betrifft die vorliegende Erfindung ein Verfahren zur Herstellung dieses Bauteils sowie die Verwendung des Bauteils als Chargiergestell zur Hochtemperaturbehandlung von Gütern.

Chargiergestelle werden beispielsweise benötigt, um Güter, wie Maschinenbauteile oder Bauteile für den Automotivebereich zu härten, in dem diese, auf einem Chargiergestell aufliegend, hohen Temperaturen ausgesetzt werden. Die Anforderungen an das Material von solchen Chargiergestellen sind hohe mechanische Belastbarkeit (Steifigkeit und Festigkeit), hohe Temperaturbeständigkeit und geringes Gewicht. Ein nach diesen Kriterien ausgezeichnetes Material stellt carbonfaserverstärkter Kohlenstoff dar. Derartige Chargiergestelle werden üblicherweise so hergestellt, dass unidirektionale, mit einem Harz vorimprägnierte Carbonfasergelege, zum Beispiel als Prepreg, übereinander laminiert werden, unter erhöhtem Druck und Temperatur aushärten und anschließend einer Pyrolyse unterzogen werden, wobei sich das ausgehärtete Harz in Kohlenstoff umwandelt.

Die unidirektionalen Carbonfasergelege bestehen hierbei (und auch im Rahmen der vorliegenden Erfindung) aus einem kontinuierlichen Band von dicht aneinander liegenden, parallelen, kontinuierlichen Carbonfasern. Nach dem Laminieren von mehreren Lagen der vorimprägnierten Carbonfasergelege und dem Aushärten des Harzes wird ein carbonfaserverstärkter Kunststoff (CFK) erhalten, wobei das ausgehärtete Harz die Matrix des CFK bildet. Bei der Pyrolyse des CFK, welche üblicherweise bei etwa 800°C erfolgt, zersetzt sich die Polymermatrix und darin enthaltene flüchtige Bestandteile entweichen. Übrig bleibt ein carbonfaserverstärkter Kohlenstoff (CFC).

Nachteilig an CFC-Chargiergestellen ist jedoch, dass sie oxidationsempfindlich sind und eine hohe offene Porosität aufweisen. Daher muss eine Hochtemperaturbehandlung mit solchen Chargiergestellen unter Ausschluss von Sauerstoff erfolgen. Dies ist üblicherweise beim Einsatz in industriellen Härteöfen unter Schutzgasatmosphäre oder Vakuum der Fall, in welchen das Chargiergut, wie z.B. Getriebezahnräder, gehärtet wird. Das zu härtende Chargiergut wird jedoch zunächst üblicherweise weichbearbeitet, zum Beispiel wird die Verzahnung von Getriebezahnrädern gefräst. Danach muss das Chargiergut von Rückständen wie Kühlschmierstoffen oder Waschlösungen befreit und getrocknet werden. Hierzu wird die komplette Charge auf bis zu 500°C mittels einer Gasflamme unter normaler Luftatmosphäre aufgeheizt, wobei die genannten Verunreinigungen abgebrannt werden. Anschließend gelangt das Chargiergut in die eigentliche Wärmebehandlungsanlage bzw. in den Härteofen. Vorzugsweise wird das Chargiergut in beiden Wärmebehandlungsprozessen auf ein und demselben Chargiergestell chargiert, denn ein Wechsel des Chargiergestells bedeutet eine nicht unerhebliche Erhöhung der Prozesskosten, da die Charge zwischen den beiden Prozessen zu einem gewissen Maße wieder abkühlen muss, umgeladen und dann erneut aufgeheizt werden muss.

Der durchgehende Einsatz von CFC Chargiergestellen bei der Voroxidation und der anschließenden Wärmebehandlung bzw. dem Härten ist jedoch aufgrund der genannten Oxidationsempfindlichkeit des CFCs nachteilig.

Bei der Abkühlung des Chargiergestells inkl. des Chargierguts am Ende der Temperaturbehandlung werden diese schließlich nach Bedarf auch in Kühlbecken mit Flüssigkeiten (z.B. Öl) gefahren. Dort sind schnellere Abkühlraten im Vergleich zur Luftabkühlung möglich. Das Kühlmedium dringt jedoch in die offene Porosität des Chargiergestellwerkstoffs ein. Das Medium wird spätestens beim nächsten Härtezyklus wieder verdampft und übt somit eine zerstörende Wirkung auf den Werkstoff aus.

Es ist daher die Aufgabe der vorliegenden Erfindung ein verbessertes Bauteil zur Verfügung zu stellen, das als Chargiergestell verwendet werden kann und eine hohe Oxidationsbeständigkeit aufweist, bei gleichzeitig hoher mechanischer Belastbarkeit (Steifigkeit und Festigkeit), hoher Temperaturbeständigkeit, geringem Gewicht und einer geringen offenen Porosität.

Als oxidationsbeständige Bauteile sind beispielsweise Siliziumcarbid (SiC)-keramische Bauteile bekannt. Diese können typischerweise mittels Flüssigsilizierung eines CFC-Formkörpers, also einer Infiltrierung von CFC mit flüssigem Silizium, hergestellt werden. Dabei reagiert ein Teil des Kohlenstoffs mit dem elementaren Silizium zu SiC. Die EP 1 340 733 B1 beschreibt beispielsweise SiC-keramische Verbundwerkstoffe mit unidirektionaler Ausrichtung der Verstärkungsfasern (insbesondere Carbonfasern). Die unidirektionalen Verstärkungsfasern liegen hier in Form von einzelnen Roving-Bündeln vor, die einen gewissen Abstand zueinander aufweisen. Für die spätere Silizierung und Bildung der SiC-Matrix ist das sich bei der Carbonisierung des CFK zum CFC-Körper einstellende Porengefüge von entscheidender Bedeutung, denn nur durch ein geeignetes Porengefüge kann gewährleistet werden, dass das flüssige Silicium gleichmäßig und in genügender Menge in den CFC-Körper eindringt (siehe EP 1 340 733 B1, Absatz 6). Sind die Rovings der Verstärkungsfasern parallel ausgerichtet und ohne Fixierung in der Ebene, so führt die Carbonisierung der Binderharze zu einer ungehinderten Kontraktion senkrecht zur Faserausrichtung, so dass die Rovings im CFC sehr dicht aufeinander schrumpfen und mit minimalem Anteil an offener Porosität nebeneinander zu liegen kommen. Die Flüssigsilizierung wird hierdurch erschwert, weil das Porenvolumen und die Verteilung von Kapillaren (Mikrokanälen) im Inneren des Werkstoffs im Vergleich zu mit Kurzfasern oder Geweben verstärkten CFC-Vorkörpern ungünstig verändert werden. Nach der herkömmlichen Technik ist es daher bislang nicht möglich, bei mit unidirektionalen Fasern ("UD-Fasern") verstärkten C/SiC-Werkstoffen zu befriedigenden Eigenschaften zu kommen (siehe EP 1 340 733 B1, Absatz 8). Der Abstand der Roving-Bündel in der EP 1 340 733 B1 ist daher nötig, damit das flüssige Silizium den CFC-Formkörper vollständig infiltrieren, beziehungsweise imprägnieren kann.

Auch in der DE 10 2007 007 410 A1 wird ein SiC-keramischer Verbundwerkstoffe mit unidirektionaler Ausrichtung der Carbonfasern beschrieben. Hierbei werden, ähnlich wie bei den oben beschriebenen CFC-Chargiergestellen unidirektionale Carbonfasergelege verarbeitet. Um die abschließende Flüssigsilizierung, aufgrund der in der EP 1 340 733 B1 genannten Schwierigkeiten, jedoch vollständig durchführen zu können, wird zwischen den unidirektionalen Carbonfasergelegen ein gewisser Abstandshalter in Form einer Beschichtung oder eines Querfadensystems vorgesehen. Der Abstandshalter verflüchtigt sich bei der Pyrolyse vorzugsweise vollständig und sorgt so für die bei der Flüssigsilizierung nötige Porenstruktur.

Nachteilig an den Lösungen der EP 1 340 733 B1 und der DE 10 2007 007 410 A1 ist jedoch, dass durch die in beiden Lösungen vorgeschlagenen Abstände der Rovings, beziehungsweise der Gelege, nicht carbonfaserverstärkte Bereiche vorliegen, wodurch das Bauteil entsprechend dicker, d.h. schwerer, ausgelegt werden muss.

Auch hierauf richtet sich die Aufgabe der vorliegenden Erfindung, ein verbessertes Bauteil zur Verfügung zu stellen.

Im Rahmen der vorliegenden Erfindung wurde gefunden, dass unter gewissen Bedingungen erstmals ein carbidkeramisches Bauteil mit unidirektionalen Carbonfasergelegen hergestellt werden kann, in welchem die Fasergelege ohne jeglichen vorgesehenen Abstand zueinander, direkt übereinander gestapelt vorliegen können, wobei der Stapel praktisch eine beliebiger Dicke aufweisen kann. Trotz der dicht gepackten unidirektionalen Carbonfasern kann der CFC Vorkörper vollständig mit flüssigem Silizium infiltriert werden.

Die Aufgabe der vorliegenden Erfindung wurde daher gelöst durch die Zurverfügungstellung eines keramischen Bauteils umfassend mindestens einen Stapel aus mindestens zwei Lagen unidirektionalem Carbonfasergelege eingebettet in eine keramische Matrix enthaltend Siliziumcarbid und elementares Silizium, dadurch gekennzeichnet, dass alle benachbarten Lagen innerhalb des mindestens einen Stapels unmittelbar aneinander angrenzen, dass der mindestens eine Stapel eine Dicke senkrecht zu der Ebene der Lagen von mindestens 1,5 mm aufweist und dass die keramische Matrix im Wesentlichen das gesamte Bauteil durchdringt.

Unter der Formulierung, dass alle benachbarten Lagen innerhalb des mindestens einen Stapels unmittelbar aneinander angrenzen, ist im Rahmen der vorliegenden Erfindung zu verstehen, dass die Lagen nicht gezielt auf Abstand gehalten werden, wie beispielsweise nach den Methoden der Patentdokumente EP 1 340 733 B1 und der DE 10 2007 007 410 A1. Von der vorliegenden Erfindung umfasst ist jedoch, dass zwischen den Lagen oder zwischen den Fasern der angrenzenden Lagen ein Matrixfilm vorliegt, beziehungsweise vorliegen kann, der bei einem direkten Aufeinanderlaminieren von vorimprägnierten Faserlagen praktisch immer vorhanden ist.

Durch die dicht aufeinanderliegenden Lagen zeichnet sich das erfindungsgemäße Bauteil durch eine erhöhte Festigkeit aus. Dadurch kann das Bauteil für die jeweilige Anwendung, zum Beispiel als Chargiergestell, dünner und damit insgesamt leichter ausgelegt werden. Dies erleichtert die Handhabung und verringert die Kosten bei der Verwendung des Chargiergestells, da es aufgrund der geringeren notwendigen Masse weniger Energie beim Aufheizen benötigt.

Die Dicke, beziehungsweise Höhe des Stapels von direkt übereinanderliegenden unidirektionalen Carbonfasergelegen ist nach oben hin nicht begrenzt. Gegenüber der DE 10 2007 007 410 A1, nach welcher die mit Abstandshalter getrennten Lagen von Carbonfasergelegen jeweils eine Dicke von nur etwa 0,1 mm aufweisen (siehe Figuren der DE 10 2007 007 410 A1), beträgt die Dicke von den entsprechenden Lagen, beziehungsweise des Lagenstapels gemäß der vorliegenden Erfindung mindestens 1,5 mm. Mit den bekannten Methoden ist dies nicht zu erreichen. Bevorzugt beträgt die genannte Dicke mindestens 2,0 mm und weiter bevorzugt mindestens 2,5 mm. Am meisten bevorzugt ist der Lagenstapel innerhalb des Bauteils so dick wie das gesamte erfindungsgemäße Bauteil selbst, d.h. das Bauteil besteht bevorzugt ausschließlich aus einem Stapel von unmittelbar aneinander angrenzenden Lagen unidirektionaler Carbonfasergelege eingebettet in die keramische Matrix.

Die Dicke der einzelnen Lagen von unidirektionalen Carbonfasergelegen ist nicht besonders eingeschränkt. Es ist möglich, dass eine Lage derart dünn ist, dass sie aus nur einer Monofilamentschicht besteht, d.h. dass die Dicke der Lage praktisch dem Durchmesser von einer Carbonfaser entspricht, welcher typischerweise im Bereich von 6 bis 9 µm liegt. Bei der Verwendung solcher Monofilamentlagen ist dann die Anzahl der erfindungsgemäß direkt übereinanderliegenden Lagen entsprechend groß, sodass der Lagenstapel eine Höhe von mindestens 1,5 mm beträgt. Bei besonders dicken Lagen, beispielsweise dicker als 0,75 mm, kann es sein, dass tatsächlich nur zwei erfindungsgemäß direkt übereinanderliegende Lagen im Bauteil vorliegen, sodass die Dicke des Stapels mindestens 1,5 mm beträgt.

Üblicherweise werden unidirektionale Carbonfasergelege durch Spreizen eines oder mehrerer Carbonfaserrovings auf eine gewisse Breite erhalten. Carbonfaserrovings sind bündel kontinuierlicher, paralleler, nicht verdrillter oder verflochtener Carbonfaserfilamente. Typischerweise werden dabei ein oder mehrere 50K-Rovings verwendet. Ein 50K-Roving besteht aus ca. 50.000 Einzelfilamenten. Diese breitgelegten Faserbänder sind, unter anderem, mit einem Harz vorimprägniert als Prepreg erhältlich. Sie weisen typischerweise eine Dicke von rund 0,25 mm auf. Ausgehend von beispielsweise solchen Prepregs kann das weiter unten beschriebene erfindungsgemäße Verfahren durchgeführt werden.

Für die Eignung des Bauteils in Hochtemperaturanwendungen in oxidativer Atmosphäre ist von entscheidender Bedeutung, dass die keramische Matrix im Wesentlichen das gesamte Bauteil durchdringt. Das bedeutet, wie weiter unten im Rahmen des erfindungsgemäßen Verfahrens weiter ausgeführt, dass der CFC-Vorkörper vom flüssigen Silizium bei der Silizierung vollständig infiltriert wird und sich die Kohlenstoffmatrix des CFC-Vorkörpers zumindest teilweise in SiC umwandelt. Damit ist das erfindungsgemäße Bauteil deutlich oxidationsbeständiger als beispielsweise nur an der Oberfläche silizierte CFC-Bauteile. Bei Letzteren dringt der Luftsauerstoff im Laufe der Zeit ins Innere ein und zerstört nach und nach die Integrität und Stabilität des Bauteils.

Bevorzugt weist die Matrix über das gesamte Bauteil eine homogene Zusammensetzung auf. Hiervon ist jedoch nicht ausgenommen, dass das Bauteil eine gewisse Oberflächenbehandlung besitzen kann, die durchaus auch bis zu einer bestimmten Tiefe von der Oberfläche in die Matrix eindringen kann. Die Zusammensetzung der strukturellen Bestandteile der Matrix, also jene, die für die Festigkeit verantwortlich sind, ist jedoch bevorzugt homogen. Dies führt zu gleichermaßen homogenen Eigenschaften des Bauteils, wie, zum Beispiel, die Festigkeit, aber auch die Oxidationsbeständigkeit.

Gemäß einer bevorzugten Ausführungsform des erfindungsgemäßen Bauteils variieren aufeinanderfolgende Lagen innerhalb des mindestens einen Stapels in ihrer Faserorientierung relativ zueinander. Beispielsweise können die Lagen abwechselnd in 0° und 90°-Faserorientierung übereinander vorliegen, was bevorzugt ist, denn diese Variation führt senkrecht zur 0°-Richtung zu einer erheblichen Verbesserung der Stabilität des Bauteils, gegenüber einem Bauteil in dem alle unidirektionalen Faserlagen nur in eine, die 0°-Richtung, orientiert sind bei gleichzeitig nur geringfügig höherem Fertigungsaufwand. Ebenfalls möglich ist eine 0°/60°/120°-Abfolge aufeinanderfolgender Lagen. Die Art der Variation der Faserorientierungen einzelner Lagen ist nicht besonders eingeschränkt und kann je nach Belastungsprofil des Bauteils in der späteren Anwendung ausgelegt werden.

Vorzugsweise weist das erfindungsgemäße Bauteil eine offene Porosität von maximal 3,5%, weiter bevorzugt maximal 3,0% auf. Je geringer die offene Porosität des Bauteils ist, desto weniger Angriffsflächen werden für oxidative Angriffe geboten. Die offene Porosität kann verringert werden, indem man zum Beispiel den CFC-Körper ein- oder mehrmals mit einem flüssigen Kohlenstofflieferanten nachverdichtet. Dieser Vorgang wird weiter unten im Rahmen einer bevorzugten Ausführungsform des erfindungsgemäßen Verfahrens genauer beschrieben.

Vorzugsweise weist das erfindungsgemäße das Bauteil einen Faservolumengehalt im Bereich von 50-65 % auf. Der Faservolumengehalt kann beispielsweise anhand von Schliffbildern geometrisch, beziehungsweise optisch bestimmt werden. Ein hoher Faservolumengehalt sorgt für ein entsprechend hohes E-Modul des Bauteils. Ein derart hoher Faservolumengehalt an Carbonfasern in SiC-keramischen Bauteilen, wie er in der bevorzugten Ausführungsform, in der die Dicke des erfindungsgemäßen Stapels der Dicke des gesamten Bauteils entspricht, kann mit den bekannten Methoden nicht hergestellt werden. Selbst bei dicht aufeinander gepressten Carbonfasergeweben ist der Faservolumengehalt geringer als bei Gelegen, da innerhalb eines Gewebes zwangsläufig Lücken vorliegen, die nicht mit Fasern gefüllt sind.

Eine einfache Ausführungsform des erfindungsgemäßen Bauteils stellt eine Platte dar, in deren Ebene die Fasergelege orientiert sind. Komplexere Ausführungsformen der vorliegenden Erfindung werden bevorzugt aus einzelnen solcher plattenförmigen Komponenten zusammengesetzt. Dieses Zusammensetzen findet, wie weiter unten im Rahmen eines bevorzugten erfindungsgemäßen Verfahrens beschrieben, vor der Silizierung statt. Das formschlüssig im graphitierten CFC-Zustand zusammengesetzte Bauteil wird sodann als Ganzes siliziert. Hierbei werden die Komponenten an den Verbindungsstellen stoffschlüssig und irreversibel miteinander verbunden. Die vorliegende Erfindung betrifft daher in einer bevorzugten Ausführungsform ein keramisches Bauteil, das mindestens zwei stoffschlüssig miteinander verbundene Komponenten umfasst, wobei die mindestens zwei Komponenten jeweils ebenfalls als erfindungsgemäße keramische Bauteile ausgebildet sind.

Bevorzugt weist die stoffschlüssige Verbindung zwischen den Grenzflächen der miteinander verbundenen Komponenten des keramischen Bauteils elementares Silizium auf. Die formschlüssig miteinander verbundenen CFC-Komponenten können jedoch auch zusätzlich mit einer Klebeverbindung ausgestattet sein. Der Kleber ist dabei bevorzugt carbonisierbar und kann sich somit bei der Silizierung des zusammengesetzten Bauteils während des Aufheizens in Kohlenstoff umwandeln. Dieser Kohlenstoff leitet das flüssige Silizium durch seine Porosität von einer Komponente der beiden verbundenen Komponenten in die andere. Das resultierende keramische Bauteil weist an der stoffschlüssigen Verbindung zwischen den Grenzflächen der miteinander verbundenen Komponenten daher neben elementarem Silizium auch SiC auf. Diese Klebe- und Fügetechnik bei zu silizierenden Materialien ist bekannt und ist beispielsweise in der DE 10 2011 007 815 A1 beschrieben. Die Art des Klebers sowie etwa darin enthaltene Füllstoffe sind nicht besonders eingeschränkt.

Das erfindungsgemäße Bauteil weist vorzugsweise bei einem Oxidationstest an Luft bei 400°C innerhalb 1 Stunde einen oxidativen Gewichtsverlust von maximal 0,05%, weiter bevorzugt 0,03% auf.

Das erfindungsgemäße Bauteil weist vorzugsweise einen E-Modul von mindestens 60 GPa auf. Das erfindungsgemäße Bauteil weist vorzugsweise eine Festigkeit von mindestens 190 MPa auf. E-Modul und Festigkeit werden bekanntermaßen im 3-Punkt Biegeversuch gemäß der aktuellen Prüfnorm EN658-3 ermittelt. Bei zusammengesetzten Bauteilen gelten auch diese Parameter natürlich nur für die einzelnen, homogenen Komponenten, die nicht durch Fügestellen unterbrochen sind.

Das erfindungsgemäße Bauteil weist vorzugsweise eine Dichte von maximal 2,0 g/cm³ aufweist. Diese geringe Dichte rührt von dem verhältnismäßig hohen Kohlenstoffgehalt, welcher wiederum von dem hohen Faservolumengehalt resultiert. Die Carbonfasern liegen im Bauteil daher noch nahezu intakt vor und sind nur geringfügig von Silizium angegriffen und in SiC umgewandelt worden. Die geringe Dichte ist insbesondere vorteilhaft für die Anwendung in Chargiergestellen, denn mit einer geringeren Dichte geht auch eine geringere Wärmekapazität einher, was die Energiekosten in der Anwendung senkt.

Ein weiterer Aspekt der vorliegenden Erfindung betrifft ein Verfahren zur Herstellung eines keramischen Bauteils umfassend die folgenden Schritte:
a) direktes Übereinanderlegen von mindestens zwei mit einem Polymer oder einem Polymer-Vorläufer imprägnierten, unidirektionalen Carbonfasergelegen,
b) Konsolidieren der übereinandergelegten Carbonfasergelege unter erhöhtem Druck und erhöhter Temperatur und Erhalt eines carbonfaserverstärkten Kunststoffs,
c) Carbonisieren des carbonfaserverstärkten Kunststoffs bei einer Temperatur zwischen 600°C und 1000°C und Erhalt eines carbonfaserverstärkten Kohlenstoffs,
d) Graphitieren des carbonfaserverstärkten Kohlenstoffs bei einer Temperatur von mindestens 1800°C,
e) Silizieren des in Schritt d) graphitierten, carbonfaserverstärkten Kohlenstoffs, wobei die Silizierung derart erfolgt, dass an einer mit flüssigem Silizium in Kontakt stehenden Fläche des graphitierten, carbonfaserverstärkten Kohlenstoffs zumindest ein Teil der Carbonfasern mindestens eines der Carbonfasergelege stirnseitig auf diese Fläche weist.

Das weiter oben beschriebene erfindungsgemäße Bauteil wird vorzugsweise mit dem erfindungsgemäßen Verfahren hergestellt. Alle im Zusammenhang mit dem erfindungsgemäßen Bauteil genannten Merkmale gelten damit in entsprechender Weise auch für das Verfahren und umgekehrt.

Unter dem direkten Übereinanderlegen ist zu verstehen, dass die imprägnierten, unidirektionalen Carbonfasergelege unmittelbar übereinander gelegt werden, das heißt, ohne dass etwas zwischen diesen vorgesehen ist. Wie weiter oben im Zusammenhang mit den Patentdokumenten EP 1 340 733 B1 und der DE 10 2007 007 410 A1 beschrieben ist das Flüssigsilizieren von CFC-Körpern, die unidirektionale Carbonfasergelege enthalten, nicht ohne weiteres möglich, da die dicht gepackten Carbonfasern im Gelege keine ausreichende Porenstruktur aufweisen, durch die das flüssige Silizium den Körper durchdringen kann. Im Rahmen der vorliegenden Erfindung wurden Maßnahmen gefunden, durch welche eine vollständige Durchdringung des Körpers mit flüssigem Silizium ermöglicht wird.

Einen entscheidenden Einfluss auf die Ausbildung eines geeigneten Porensystems im CFC-Körper ist das in Schritt d) genannte Graphitieren des CFC-Körpers. Bei der Graphitierungstemperatur von 1800°C und höher vollzieht die Carbonfaser eine besondere Änderung ihrer Geometrie: sie wird kürzer und gleichzeitig dicker, das heißt, in Faserrichtung schrumpft die Carbonfaser, während sie sich senkrecht dazu aufwietet. Dieses Aufweiten führt dazu, dass entlang der Carbonfasern nach dem Abkühlen Kanäle entstehen, die für die Silizierung geeignet sind. Das Graphitieren kann praktischerweise auch in einem Schritt mit der vorangehenden Carbonisierung stattfinden, ohne dass dazwischen noch einmal abgekühlt werden muss, das heißt, dass der zu carbonisierende und zu graphitierende Körper in einem Schritt auf die gewählte Graphitierungstemperatur gebracht werden kann.

Um nun das Silizium in diese Kanäle gelangen zu lassen, ist es erfindungsgemäß vorgesehen, dass bei der Flüssigsilizierung der graphitierte CFC-Körper derart mit flüssigem Silizium in Kontakt gebracht wird, dass zumindest ein Teil der Carbonfasern des graphitierten, carbonfaserverstärkten Kohlenstoffs stirnseitig auf die Kontaktfläche mit dem flüssigen Silizium weist. Der genaue Winkel in dem diese Carbonfasern auf die Kontaktfläche weisen ist dabei nicht besonders eingeschränkt, das heißt sie können auch schräg auf die Kontaktfläche weisen. Um dies etwas anschaulicher auszudrücken, kann, beispielsweise bei plattenförmigen erfindungsgemäßen Bauteilen mit 0°/90°-Faserorientierung der Gelege, die Silizierung über eine beliebige Kantenfläche der entsprechenden CFC-Platte erfolgen. Es hat sich gezeigt, dass, sobald das Silizium einmal den Weg in das Innere des Vorkörpers gefunden hat, dieser vollständig imprägniert wird. Erschwert wird die Silizierung dagegen dann, wenn der beispielhaft genannte, plattenförmige Vorkörper über seine große, parallel zu den Gelegen liegende Fläche siliziert werden soll, beispielsweise, indem er auf Dochte aufgelegt wird.

Das in Schritt a) genannte einem Polymer oder der Polymer-Vorläufer ist nicht besonders eingeschränkt. Es kann sich dabei um eine Lösung, eine Schmelze oder ein Pulver von Kunstharzen, Thermoplasten oder deren Vorläufern handeln, wobei Kunstharze bevorzugt sind, da diese üblicherweise zu formstabilen Duroplasten umgewandelt werden können. Geeignete und damit bevorzugte Kunstharze sind Phenolharz, Furanharz und Cyanatester. Das Polymer oder der Polymer-Vorläufer umfasst daher gemäß einer bevorzugten Ausführungsform ein Kunstharz, ausgewählt aus der Gruppe bestehend aus Phenolharz, Furanharz, Cyanatester. Als ein bevorzugter Thermoplast wird ein carbonisierbarer Thermoplast verwendet. Dabei wird als "carbonisierbarer Thermoplast" ein Thermoplast bezeichnet, der bei Erhitzen auf eine Temperatur von mindestens 800°C unter Ausschluss von oxydierenden Stoffen einen Kohlenstoff-Rückstand bildet, dessen Masse mindestens 20% der Masse (im Falle von Lösungen, der Trockenmasse) des eingesetzten Thermoplasten beträgt.

Unter Konsolidieren gemäß Schritt b) ist zu verstehen, dass die übereinandergelegten, imprägnierten Carbonfasergelege zu einem CFK-Körper verfestigt werden. Im Falle von Duroplast-Vorläufern, wie Phenolharzen, Furanharzen oder Cyanatester umfasst der Schritt des Konsolidierens das Aushärten des Kunstharzes. Im Falle von Thermoplasten umfasst der Schritt des Konsolidierens das Verbinden der Lagen untereinander durch schmelzen des Thermoplasts.

Gemäß einer bevorzugten Ausführungsform der vorliegenden Erfindung wird der carbonfaserverstärkte Kohlenstoff nach Schritt c) mindestens einmal einer Nachbehandlung unterzogen, welche die folgenden Schritte umfasst:
c1) Imprägnieren des carbonfaserverstärkten Kohlenstoffs mit einem flüssigen Kohlenstofflieferanten und
c2) Carbonisieren des imprägnierten carbonfaserverstärkten Kohlenstoffs gemäß Schritt c).

Unter einem Kohlenstofflieferanten ist jede flüssige Substanz zu verstehen, bei welcher nach der Pyrolyse, beziehungsweise Carbonisierung, Kohlenstoff übrig bleibt. Weiterhin sind im Rahmen der vorliegenden Erfindung die Begriffe Pyrolyse und Carbonisierung als Synonyme zu verstehen. Bevorzugte Kohlenstofflieferanten sind Pech, Phenolharz und Furfurylalkohol, da diese eine hohe Kohlenstoffausbeute besitzen.

Gemäß einer bevorzugten Ausführungsform der vorliegenden Erfindung ist das mit einem Polymer oder einem Polymer-Vorläufer imprägnierte, unidirektionale Carbonfasergelege ein Prepreg, ausgewählt aus der Gruppe bestehend aus Phenolharzprepreg, Furanharzprepreg und Cyanatesterprepreg. Diese zeichnen sich durch eine vorteilhafte Handhabung beim übereinander-Laminieren aus und bilden formstabile CFK-Körper.

Im Falle der Verwendung eines Kunstharzes und insbesondere eines Prepregs umfasst das Konsolidieren der übereinandergelegten Carbonfasergelege das Aushärten des Kunstharzes.

Gemäß einer bevorzugten Ausführungsform der vorliegenden Erfindung wird der graphitierte, carbonfaserverstärkte Kohlenstoff gemäß der gewünschten Form des keramischen Bauteils mechanisch bearbeitet, wodurch ein Formkörper erhalten wird. Als Formkörper ist im Rahmen der vorliegenden Erfindung der mechanisch bearbeitete graphitierte CFC-Körper vor der Silizierung zu verstehen. Die mechanische Bearbeitung eines CFC-Körpers ist gegenüber der des deutlich härteren silizierten Bauteils, deutlich weniger aufwändig.

Gemäß einer bevorzugten Ausführungsform der vorliegenden Erfindung werden mindestens zwei Formkörper formschlüssig miteinander verbunden und zwar derart, dass an den jeweiligen miteinander in Kontakt stehenden Grenzflächen der verbundenen Formkörper an beiden Formkörpern zumindest ein Teil der Carbonfasern mindestens eines der Carbonfasergelege stirnseitig auf diese Grenzflächen weisen. Dies trägt zum besseren Übergang des Siliziums von einer Komponente in die andere bei. Der Begriff "stirnseitig" hat hier die gleiche Bedeutung wie im Zusammenhang mit dem erfindungsgemäßen Bauteil weiter oben definiert. Derart gefügte Bauteile sind monolithisch und müssen daher nicht durch zusätzliche, aufwändige Verbindungselemente, wie zum Beispiel Federn, Klammern, etc. verbunden werden. In einer bevorzugten Variante dieser Ausführungsform werden in einzelne längliche Platten an einer der beiden langen Kanten Fugen eingearbeitet, die in ihrer Breite der Dicke einer Platte entsprechen. Diese Fugen weisen von der Kante der Platte aus in einem rechten Winkel nach innen bis hin zur Mitte, beziehungsweise zur Längsachse der Platte. Die so gefugten Platten werden sodann zu einem schachbrettartigen Gitterrost zusammengesteckt, analog der Blockhausbauweise. Dieser Gitterrost kann anschließend als Ganzes siliziert werden. Dieses Beispiel zeigt, dass es nicht erforderlich ist, auf der gesamten Grenzfläche einer Komponente die in Kontakt mit einer anderen Komponente steht, strinseitig endende Fasern vorzusehen. Es reicht vielmehr aus, die stirnseitig endenden Fasern nur bereichsweise auf der Grenzfläche vorzusehen, wobei die entsprechenden Bereiche der zu verbindenden Komponenten zumindest teilweise in gegenseitigem Kontakt stehen müssen.

Ein weiterer Aspekt der vorliegenden Erfindung stellt die Verwendung des erfindungsgemäßen keramischen Bauteils als Chargiergestell dar, bevorzugt als Chargiergestell in Anwendungen unter hoher Temperatur (mindestens 500°C) und weiter bevorzugt in Anwesenheit von Luftsauerstoff. In Bezug auf diese vorteilhafte Verwendung wurde die vorliegende Erfindung, beziehungsweise das erfindungsgemäße Bauteil vorstehend bereits umfassend beschrieben, worauf hiermit, zur Vermeidung von Wiederholungen, verwiesen wird.

Die vorliegende Erfindung wird im Folgenden anhand von konkreten Beispielen illustriert.

### Beispiele

20 Lagen eines UD-Prepregs wurden abwechselnd in 0°-/90°-Orientierung direkt übereinander gelegt. Das UD-Prepreg besteht dabei aus parallelen Carbonfasern die mit noch nicht ausgehärtetem Phenolharz imprägniert sind. Das Prepreg weist erfindungsgemäß keinerlei Hilfsfäden oder sonstige Bestandteile quer zur Faserrichtung der Carbonfasern auf. Eine Lage dieses Prepregs hat eine Höhe, beziehungsweise Dicke von ca. 0,25 mm und eine Breite von ca. 1,20 m. Das Laminat wird in einer flachen Pressform unter 1 bar, bei 140 °C 8 Stunden lang ausgehärtet. Die dabei entstehende CFK-Platte wird von ausgetretenem Harz an der Oberfläche befreit und auf kleinere Prüflinge mit den Maßen 10 cm x 10 cm zugeschnitten.

Die CFK-Platten werden bei 900°C unter Schutzgas (Stickstoff) carbonisiert.

Ein Prüfling der carbonisierten Platte wurde 2x (Beispiel 1), eine andere 3x (Beispiel 2) der folgenden Nachverdichtungsprozedur unterzogen:
- Imprägnieren mit Pech und
- erneutes Carbonisieren (900°C).

Anschließend wurden die Prüflinge von Beispiel 1 und 2 einer 24-stündigen Graphitierung bei ca. 2000°C unterzogen. Die graphitierten CFC-Prüflinge wurden in eine Silizierungskammer gegeben und bei ca. 1700°C siliziert. Hierbei sind die Prüflinge in einem Gestell aus Graphit eingesetzt, das in einem Graphittiegel steht in dem sich eine für die Silizierung ausreichende Menge Siliziumpulver befindet. Das Graphitgestell gewährleistet dabei die erfindungsgemäße Ausrichtung des Bauteils zur Siliziumbadoberfläche, d.h. das während der Silizierung eine Kante der Platten mit der Si-Schmelze in Kontakt steht, denn den Kanten Enden einige der Carbonfasern strinseitig.

| | Prüfling Beispiel 1 | Prüfling Beispiel 2 |
|---|---|---|
| AD (g/cm³) | 1,90 | 1,80 |
| Offene Porosität | 2% | 3% |
| Si-Anteil | 10% | 8% |
| C-Anteil | 66% | 71% |
| SiC-Anteil | 24% | 21% |
| E-Modul (GPa) | 60 | 65 |

| | | |
|---|---|---|
| AD: Dichte nach dem Archimedes-Prinzip mit Wasser bestimmt. Offene Porosität: Wurde ebenfalls nach dem Archimedes-Prinzip bestimmt gemessen. Si-Anteil: freies, nicht an Kohlenstoff gebundenes Silizium. C-Anteil: freier, nicht an Silizium gebundener Kohlenstoff. | | |

Von dem Prüfling gemäß Beispiel 2 wurde ein Oxidationstest durchgeführt. Bei 400°C an Luft wurde über 8 Std. ein Gewichtsverlust von ca. 0,15% ermittelt, was einem Gewichtsverlust pro Stunde von etwa 0,02% entspricht.

Bei beiden Prüflingen fällt der enorm hohe Anteil an freiem Kohlenstoff auf, welche vom hohen Faservolumengehalt resultiert. Dies führt schließlich zu einem hohen E-Modul und einer geringen Dichte, was in Kombination mit der geringen Oxidationsempfindlichkeit die bekannten keramischen Materialien übertrifft. Weiterhin zeigt sich, dass eine zusätzliche Nachverdichtung gemäß Beispiel 2 einen höheren E-Modul zur Folge hat. Dies ist vermutlich darin begründet, dass die Carbonfasern hierdurch noch besser geschützt werden und somit mehr von der Faser erhalten bleibt. C-Anteil bzw. SiC-Anteil von Beispiel 2 weisen ebenfalls darauf hin.

## Patentansprüche

1. Keramisches Bauteil umfassend mindestens einen Stapel aus mindestens zwei Lagen unidirektionalem Carbonfasergelege eingebettet in eine keramische Matrix enthaltend Siliziumcarbid und elementares Silizium, **dadurch gekennzeichnet, dass** alle benachbarten Lagen innerhalb des mindestens einen Stapels unmittelbar aneinander angrenzen, dass der mindestens eine Stapel eine Dicke senkrecht zu der Ebene der Lagen von mindestens 1,5 mm aufweist, dass die keramische Matrix im Wesentlichen das gesamte Bauteil durchdringt und dass das Bauteil eine Dichte von maximal 2,0 g/cm³ und einen Faservolumengehalt im Bereich von 50-65% aufweist.

2. Keramisches Bauteil nach Anspruch 1, **dadurch gekennzeichnet, dass** die Matrix über das gesamte Bauteil eine homogene Zusammensetzung aufweist.

3. Keramisches Bauteil nach Anspruch 1, **dadurch gekennzeichnet, dass** aufeinanderfolgende Lagen innerhalb des mindestens einen Stapels in ihrer Faserorientierung relativ zueinander variieren.

4. Keramisches Bauteil nach Anspruch 1, **dadurch gekennzeichnet, dass** das Bauteil eine offene Porosität von maximal 3,5% aufweist.

5. Keramisches Bauteil nach Anspruch 1, **dadurch gekennzeichnet, dass** das Bauteil mindestens zwei stoffschlüssig miteinander verbundene Komponenten umfasst, wobei die mindestens zwei Komponenten jeweils ebenfalls als keramische Bauteile nach Anspruch 1 ausgebildet sind.

6. Verfahren zur Herstellung eines keramischen Bauteils nach einem der vorhergehenden Ansprüche umfassend die folgenden Schritte:
a) direktes Übereinanderlegen von mindestens zwei mit einem Polymer oder einem Polymer-Vorläufer imprägnierten, unidirektionalen Carbonfasergelegen,
b) Konsolidieren der übereinandergelegten Carbonfasergelege unter erhöhtem Druck und erhöhter Temperatur und Erhalt eines carbonfaserverstärkten Kunststoffs,
c) Carbonisieren des carbonfaserverstärkten Kunststoffs bei einer Temperatur zwischen 600°C und 1000°C und Erhalt eines carbonfaserverstärkten Kohlenstoffs,
d) Graphitieren des carbonfaserverstärkten Kohlenstoffs bei einer Temperatur von mindestens 1800°C,
e) Silizieren des in Schritt d) graphitierten, carbonfaserverstärkten Kohlenstoffs, wobei die Silizierung derart erfolgt, dass an einer mit flüssigem Silizium in Kontakt stehenden Fläche des graphitierten, carbonfaserverstärkten Kohlenstoffs zumindest ein Teil der Carbonfasern mindestens eines der Carbonfasergelege stirnseitig auf diese Fläche weist.

7. Verfahren nach Anspruch 6, **dadurch gekennzeichnet, dass** der carbonfaserverstärkte Kohlenstoff nach Schritt c) mindestens einmal einer Nachbehandlung unterzogen wird, welche die folgenden Schritte umfasst:
c1) Imprägnieren des carbonfaserverstärkten Kohlenstoffs mit einem flüssigen Kohlenstofflieferanten und
c2) Carbonisieren des imprägnierten carbonfaserverstärkten Kohlenstoffs gemäß Schritt c).

8. Verfahren nach Anspruch 6, **dadurch gekennzeichnet, dass** das Polymer oder der Polymer-Vorläufer ein Kunstharz umfasst, ausgewählt aus der Gruppe bestehend aus Phenolharz, Furanharz und Cyanatester.

9. Verfahren nach Anspruch 6, **dadurch gekennzeichnet, dass** das mit einem Polymer oder einem Polymer-Vorläufer imprägnierte, unidirektionale Carbonfasergelege ein Prepreg ist, ausgewählt aus der Gruppe bestehend aus Phenolharzprepreg, Furanharzprepreg und Cyanatesterprepreg.

10. Verfahren nach Anspruch 6, **dadurch gekennzeichnet, dass** das Konsolidieren der übereinandergelegten Carbonfasergelege das Aushärten des Kunstharzes umfasst.

11. Verfahren nach Anspruch 6, **dadurch gekennzeichnet, dass** der graphitierte, carbonfaserverstärkte Kohlenstoff gemäß der gewünschten Form des keramischen Bauteils mechanisch bearbeitet wird, wodurch ein Formkörper erhalten wird.

12. Verfahren nach Anspruch 11, **dadurch gekennzeichnet, dass** mindestens zwei Formkörper formschlüssig miteinander verbunden werden und zwar derart, dass an den jeweiligen miteinander in Kontakt stehenden Grenzflächen der verbundenen Formkörper zumindest ein Teil der Carbonfasern der entsprechenden Formkörper stirnseitig auf diese Grenzflächen weisen.

13. Verwendung des keramischen Bauteils gemäß Anspruch 1 als Chargiergestell.

## Claims

1. Ceramic component comprising at least one stack of at least two layers of unidirectional carbon fiber fabric embedded in a ceramic matrix containing silicon carbide and elemental silicon, **characterized in that** all adjacent layers within the at least one stack directly adjoin one another, **wherein** the at least one stack has, perpendicularly to the plane of the layers, a thickness of at least 1.5 mm, **wherein** the ceramic matrix substantially infiltrates the entire component, and **wherein** the component has a density of at most 2.0 g/cm³ and a fiber volume content in the range of 50-65%.

2. Ceramic component according to claim 1, **characterized in that** the matrix has a homogeneous composition across the entire component.

3. Ceramic component according to claim 1, **characterized in that** successive layers within the at least one stack vary in their fiber orientation relative to one another.

4. Ceramic component according to claim 1, **characterized in that** the component has an open porosity of at most 3.5%.

5. Ceramic component according to claim 1, **characterized in that** the component comprises at least two bonded components, wherein the at least two components are each likewise configured as ceramic components according to claim 1.

6. Method for producing a ceramic component according to any of the preceding claims, comprising the following steps:
a) directly placing at least two unidirectional carbon fiber fabrics impregnated with a polymer or a polymer precursor one on top of the other,
b) consolidating the carbon fiber fabrics placed one on top of the other under increased pressure and increased temperature and obtaining a carbon fiber-reinforced plastic material,
c) carbonizing the carbon fiber-reinforced plastic material at a temperature between 600°C and 1000°C and obtaining a carbon fiber-reinforced carbon,
d) graphitizing the carbon fiber-reinforced carbon at a temperature of at least 1800°C,
e) siliconizing the graphitized, carbon fiber-reinforced carbon from step d), wherein the siliconization is carried out in such a manner that, at a surface of the graphitized, carbon fiber-reinforced carbon that is in contact with liquid silicon, at least a portion of the carbon fibers of at least one of the carbon fiber fabrics points with its end face toward said surface.

7. Method according to claim 6, **characterized in that** the carbon fiber-reinforced carbon according to step c) is subjected, at least once to a posttreatment comprising the following steps:
c1) impregnating the carbon fiber-reinforced carbon with a liquid carbon source and
c2) carbonizing the impregnated carbon fiber-reinforced carbon according to step c).

8. Method according to claim 6, **characterized in that** the polymer or polymer precursor comprises a synthetic resin selected from the group consisting of phenolic resin, furan resin and cyanate ester.

9. Method according to claim 6, **characterized in that** the unidirectional carbon fiber fabric impregnated with a polymer or a polymer precursor is a prepreg selected from the group consisting of phenol resin prepreg, furan resin prepreg and cyanate ester prepreg.

10. Method according to claim 6, **characterized in that** the consolidation of the carbon fiber fabrics placed one on top of the other comprises curing the synthetic resin.

11. Method according to claim 6, **characterized in that** the graphitized, carbon fiber-reinforced carbon is mechanically machined according to the desired shape of the ceramic component, resulting in a shaped body.

12. Method according to claim 11, **characterized in that** at least two shaped bodies are form-fittingly connected to one another such that, at the respective boundary surfaces of the connected shaped bodes that are in contact with one another, at least a portion of the carbon fibers of the respective shaped bodies points with its end face toward said boundary surfaces.

13. Use of the ceramic component according to claim 1 as a charging rack.

## Revendications

1. Élément structural en céramique comprenant au moins un empilement d'au moins deux couches de nappe de fibres de carbone unidirectionnel noyées dans une matrice céramique contenant du carbure de silicium et du silicium élémentaire, **caractérisé en ce que** toutes les couches voisines à l'intérieur de l'au moins un empilement sont directement adjacentes les unes aux autres, **en ce que** l'au moins un empilement présente une épaisseur perpendiculaire au plan des couches d'au moins 1,5 mm, **en ce que** la matrice céramique traverse sensiblement l'ensemble de l'élément structural **et en ce que** l'élément structural présente une densité de 2,0 g/cm³ au maximum et une teneur volumique en fibres dans la plage allant de 50 à 65 %.

2. Élément structural en céramique selon la revendication 1,
**caractérisé en ce que** la matrice présente une composition homogène sur l'ensemble de l'élément structural.

3. Élément structural en céramique selon la revendication 1,
**caractérisé en ce que** des couches successives à l'intérieur de l'au moins un empilement varient les unes par rapport aux autres dans leur orientation de fibres.

4. Élément structural en céramique selon la revendication 1,
**caractérisé en ce que** l'élément structural présente une porosité ouverte de 3,5 % au maximum.

5. Élément structural en céramique selon la revendication 1,
**caractérisé en ce que** l'élément structural comprend au moins deux composants reliés par liaison de matière l'un à l'autre, dans lequel les au moins deux composants sont également respectivement réalisés sous forme d'éléments structuraux en céramique selon la revendication 1.

6. Procédé de fabrication d'un élément structural en céramique selon l'une des revendications précédentes, comprenant les étapes suivantes :
a) superposition directe d'au moins deux nappes de fibres de carbone unidirectionnels imprégnés d'un polymère ou d'un précurseur de polymère,
b) consolidation des nappess de fibres de carbone superposés sous pression élevée et température élevée et obtention d'une matière plastique renforcée de fibres de carbone,
c) carbonisation de la matière plastique renforcée de fibres de carbone à une température comprise entre 600 °C et 1 000 °C et obtention d'un carbone renforcé de fibres de carbone,
d) graphitisation du carbone renforcé de fibres de carbone à une température d'au moins 1 800 °C,
e) silicuration de le carbone renforcé de fibres de carbone graphité à l'étape d), dans lequel la silicuration est effectuée de telle sorte que, sur une surface du carbone renforcé de fibres de carbone graphité en contact avec du silicium liquide, au moins une partie des fibres de carbone d'au moins l'une des nappes de fibres de carbone est orientée frontalement vers ladite surface.

7. Procédé selon la revendication 6, **caractérisé en ce que** le carbone renforcé de fibres de carbone, après l'étape c), est soumis au moins une fois à un post-traitement qui comprend les étapes suivantes :
c1) imprégnation du carbone renforcé de fibres de carbone d'une source de carbone liquide, et
c2) carbonisation du carbone renforcé de fibres de carbone imprégné selon l'étape c).

8. Procédé selon la revendication 6, **caractérisé en ce que** le polymère ou le précurseur de polymère comprend une résine synthétique choisie dans le groupe constitué d'une résine phénolique, d'une résine furanique et d'un ester cyanate.

9. Procédé selon la revendication 6, **caractérisé en ce que** la nappe de fibres de carbone unidirectionnel imprégné d'un polymère ou d'un précurseur de polymère est un préimprégné choisi dans le groupe constitué d'un préimprégné de résine phénolique, d'un préimprégné de résine furanique et d'un préimprégné d'ester cyanate.

10. Procédé selon la revendication 6, **caractérisé en ce que** la consolidation des nappes de fibres de carbone superposés comprend le durcissement de la résine synthétique.

11. Procédé selon la revendication 6, **caractérisé en ce que** le carbone renforcé de fibres de carbone graphité est usiné mécaniquement selon la forme souhaitée de l'élément structural en céramique, moyennant quoi un corps façonné est obtenu.

12. Procédé selon la revendication 11, **caractérisé en ce qu'**au moins deux corps façonnés sont reliés par complémentarité de forme l'un à l'autre, et ce de telle sorte qu'au niveau des surfaces limites respectives des corps façonnés reliés, lesquelles sont en contact l'une avec l'autre, au moins une partie des fibres de carbone des corps façonnés correspondants est orientée frontalement vers lesdites surfaces limites.

13. Utilisation de l'élément structural en céramique selon la revendication 1 en tant que support de chargement.
